(19) Europäisches Patentamt
European Patent Office
Office européen des brevets

(11) Veröffentlichungsnummer: **0 040 413**
**A1**

(12) # EUROPÄISCHE PATENTANMELDUNG

(21) Anmeldenummer: 81103749.8

(22) Anmeldetag: 15.05.81

(51) Int. Cl.³: C 09 B 29/085
D 06 P 1/18

(30) Priorität: 21.05.80 DE 3019278

(43) Veröffentlichungstag der Anmeldung: 25.11.81 Patentblatt 81/47

(84) Benannte Vertragsstaaten: BE CH DE FR GB IT LI

(71) Anmelder: CASSELLA Aktiengesellschaft
Hanauer Landstrasse 526
D-6000 Frankfurt am Main 61(DE)

(72) Erfinder: Bühler, Ulrich, Dr.
Nidderauer Strasse 13
D-6369 Schöneck 1(DE)

(72) Erfinder: Löwenfeld, Rudolf, Dr.
Quellenweg 2
D-6072 Dreieich(DE)

(72) Erfinder: Kosubek, Uwe
Am Vogelanger 28
D-6087 Büttelborn 2(DE)

(74) Vertreter: Urbach, Hans-Georg, Dr. et al,
Hanauer Landstrasse 526
D-6000 Frankfurt am Main 61(DE)

(54) **Wasserunlösliche Monoazofarbstoffe, ihre Herstellung und Verwendung.**

(57) Von wasserlöslichmachenden Gruppen freie Monoazofarbstoffe der Formel I

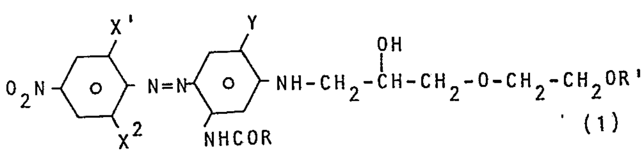

(1)

worin X¹ Nitro, Cyan, Wasserstoff, X² Chlor, Brom, Wasserstoff, Y Methoxy, Ethoxy, Hydroxyethoxy, Methoxyethoxy, Ethoxyethoxy, Methyl, Chlor, Brom, Wasserstoff, R Alkyl mit 1 bis 3 C-Atomen, R' Alkyl mit 1 bis 4 C-Atomen bedeuten, werden dadurch hergestellt, daß ein Amin der Formel II

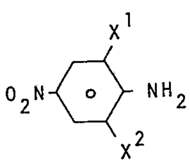

(11)

diazotiert und auf ein Amin der Formel III

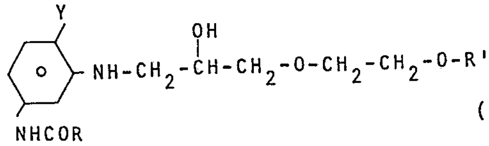

(111)

gekuppelt wird. Die Farbstoffe werden zum Färben und Bedrucken von hydrophoben synthetischen oder halbsynthetischen Materialien verwendet.

EP 0 040 413 A1

Wasserunlösliche Monoazofarbstoffe, ihre Herstellung und Verwendung

Die vorliegende Erfindung betrifft wertvolle, von wasserlöslichmachenden Gruppen freie Monoazofarbstoffe der Formel I

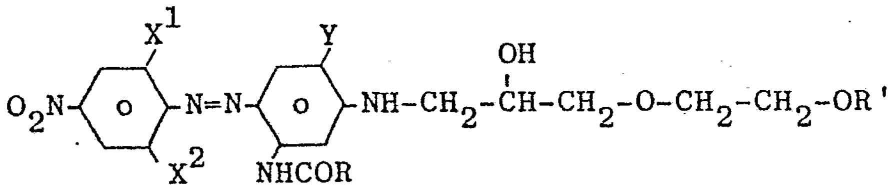

(I)

worin $X^1$ Nitro, Cyan, Wasserstoff; $X^2$ Chlor, Brom, Wasserstoff; Y Methoxy, Ethoxy, Hydroxyethoxy, Methoxyethoxy, Ethoxyethoxy, Methyl, Chlor, Brom, Wasserstoff; R Alkyl mit 1 bis 3 C-Atommen; R' Alkyl mit 1 bis 4 C-Atomen bedeuten, ihre Herstellung durch Diazotierung von Aminen der Formel II

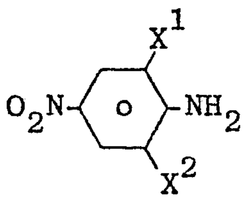

(II)

und anschließende Kupplung auf Amine der Formel III

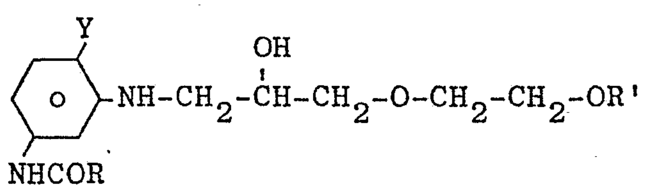

(III)

sowie ihre Verwendung zum Färben und Bedrucken von synthetischen, halbsynthetischen und natürlichen Fasern bzw. von Mischgeweben aus diesen Fasern.

Monoazofarbstoffe mit Kupplungskomponenten, die β-Hydroxy-γ-alkoxy-propylamino-Reste tragen, sind bereits in zahlreichen Patentanmeldungen und Patenten beschrieben worden, wie z.B. in den japanischen Offenlegungsschriften 73/80870; 74/61476; 74/71272; 74/01866; 75/12383; 75/13680; 77/9027; 66/71135, den bekanntgemachten japanischen Patentanmeldungen 71/37035; 71/07235; 72/26652; 72/37235; 72/43154; 72/48883; 73/17649, der DE-OS 2 101 912; OE-AS 1 644 305; BE-PS 714 913; FR-PS 117 791; GB-PS 1 268 040.

Diese bekannten Farbstoffe lassen jedoch noch zahlreiche Wünsche der Praxis offen, insbesondere im Hinblick auf die Applikation, wo sich beispielsweise Mängel im Aufbauvermögen, in der Temperaturstabilität, in der pH-Beständigkeit und in der Reduktionsempfindlichkeit bzw. daraus resultierender Egalitätsmängel, aber auch im Hinblick auf die Echtheiten der Färbungen und nicht zuletzt auf die Kosten der Färbung unter Berücksichtigung der Farbstärke zeigen. Die Farbstoffe der vorliegenden Erfindung tragen überraschenderweise den Bedürfnissen der Praxis in weit höherem Maße Rechnung als die bisher bekannten.

Die für R oder R' stehenden Alkylgruppen können geradkettig oder verzweigt sein. Alkylgruppen, die für R stehen können, sind: Methyl, Ethyl, n-Propyl oder i-Propyl. Alkylgruppen, die für R' stehen können, sind: Methyl, Ethyl, n-Propyl, i-Propyl, n-Butyl, i-Butyl oder t-Butyl. Bevorzugt für R stehende Alkylreste sind Methyl oder Ethyl, wenn Y für Methoxy, Ethoxy, Hydroxyethoxy, Methoxyethoxy, Ethoxyethoxy, Methyl, Brom oder Chlor steht und Methyl, Ethyl, n-Propyl und i-Propyl, wenn Y für Wasserstoff steht. Bevorzugte Alkylreste, die für R' stehen, sind Methyl, Ethyl, n-Propyl, i-Propyl, n-Butyl und i-Butyl.

Bevorzugt sind solche Farbstoffe der Formel I, bei denen $X^1$ und $X^2$ Wasserstoff bedeuten, ferner solche Farbstoffe, bei denen $X^1$ Wasserstoff und $X^2$ Chlor oder Brom bedeuten, ferner solche Farbstoffe, bei denen $X^1$ Cyan oder Nitro und $X^2$ Chlor oder Brom bedeuten. Ganz besonders bevorzugt sind Farbstoffe, bei denen R Methyl oder Ethyl, Y Methyl, Chlor, Methoxy, Ethoxy, Hydroxyethoxy, Methoxyethoxy, Ethoxyethoxy, $X^1$ Nitro und $X^2$ Chlor oder Brom bedeuten. Ganz besonders bevorzugt

sind auch Farbstoffe der Formel I, bei denen Y, $X^1$ und $X^2$ Wasserstoff bedeuten, sowie solche, bei denen Y und $X^1$ Wasserstoff und $X^2$ Chlor oder Brom und solche, bei denen Y Wasserstoff, $X^1$ Nitro und $X^2$ Chlor oder Brom bedeuten. Bevorzugt sind auch solche Farbstoffe der Formel I, bei denen Y Wasserstoff und $X^1$ Nitro oder Cyan und $X^2$ Wasserstoff bedeuten.

Die Herstellung der Farbstoffe der Formel I durch Diazotierung und Kupplung erfolgt in an sich bekannter Weise. So erfolgt die Diazotierung des Amins der Formel II durch Einwirkung von salpetriger Säure oder salpetrige Säure abspaltende Verbindungen. Beispielsweise können die Amine II in Schwefelsäure, Salzsäure oder in niederen aliphatischen Carbonsäuren, wie z.B. Essigsäure oder Propionsäure, gelöst werden und bei 0 bis 60°C durch Zusatz von Nitrosylschwefelsäure oder Natriumnitrit diazotiert werden. Die Kupplung des diazotierten Amins II auf das Amin III wird im sauren wäßrigen Medium oder in einer niederen aliphatischen Carbonsäure, wie z.B. Essigsäure, die zweckmäßigerweise mit Wasser verdünnt ist, oder in einer Mischung aus Wasser und einem in Wasser wenig löslichen Alkohol, wie n- oder i-Butanol, bei Temperaturen von 0 bis 30°C ausgeführt. Bevorzugt wird hierbei der Temperaturbereich von 0 bis 20°C. Zur Vervollständigung der Kupplungsreaktion kann es zweckmäßig sein, den pH-Wert des Kupplungsansatzes gegen Ende der Reaktion durch Zusatz von Alkalien, wie z.B. von Natriumacetat, auf einen Wert von 3 bis 6 zu puffern.

Die Amine der Formel II sind bekannt. Die Amine der Formel III können z.B. in an sich bekannter Weise aus Aminen der Formel IV und 3-Alkoxy-1,2-epoxypropanen der Formel V:

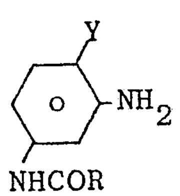 (IV)

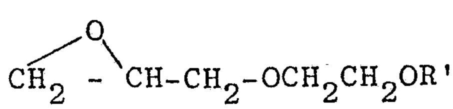 (V)

hergestellt werden (vergl. S.R. TULYAGANOV et al, Biol. Aktiv Soedin 1968, 19). Verfahren zur Herstellung der 3-Alkoxy-1,2-epoxypropane der Formel V aus Epichlorhydrin und Alkoholen oder Alkoholaten sind z.B. in Houben-Weyl 613, 375 (1965) und der dort zitierten Literatur beschrieben.

Die Amine der Formel III lassen sich aber auch ebenfalls in bekannter Weise herstellen, indem Amine der Formel IV mit Epihalogenhydrinen zu 3-Halogen-2-hydroxypropylaminen (VI) oder 3-Amino-1,2-epoxypropanen (VII)

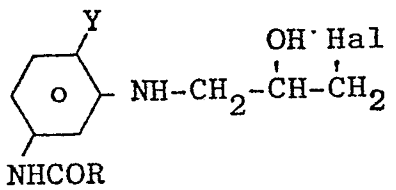

(VI)

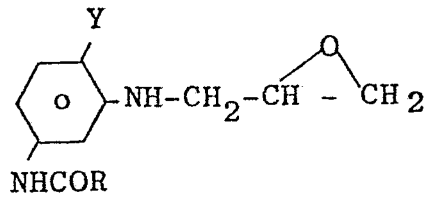

(VII)

umgesetzt werden (vergl. PAUL COHN et al, Ber. Deut. Chem.Ges. 37, 3034 (1904) bzw. J.B. Mc Kelvey et al, J.Org.Chem. 25 1424/1960), wobei Hal Chlor, Brom und Jod, vorzugsweise Chlor und Brom, bedeuten kann, und die Amine der Formeln VI bzw. VII anschließend mit Alkoholen oder Alkoholaten der Formel $R'OCH_2CH_2OH$ bzw. $R'OCH_2CH_2OMe$, wobei Me ein Alkali- oder Erdalkalimetall, z.B. Natrium oder Calcium, sein kann, in die Amine der Formel III übergeführt werden.

Die erfindungsgemäßen Azofarbstoffe sind einzeln oder im Gemisch untereinander oder auch im Gemisch mit anderen Dispersionsfarbstoffen vorzüglich zum Färben und Bedrucken von hydrophoben synthetischen oder halbsynthetischen Materialien oder Mischgeweben aus den genannten Materialien und hydrophilen Materialien geeignet. Sie liefern hierauf nach üblichen Färbe- und Druckverfahren farbstarke, rote bis marineblaue Färbungen und Drucke mit sehr guten Echtheitseigenschaften, insbesondere sehr guter Licht-, Trockenhitzeplissier- und Trockenhitzefixierechtheit und einem sehr guten Verhalten bei der Kunstharzausrüstung bei sehr gutem Thermomigrationsverhalten. Sie zeigen weiter eine hohe pH- und Reduktionsbeständigkeit, eine geringe Temperaturempfindlichkeit und sehr gute Echtheitseigenschaften bei der Wäsche 95°C gegenüber Peroxiden, Schweiß sauer und alkalisch, Stickoxiden und Abgasen, bei der Hypochlorit-Bleichechtheit und bei der Reibechtheit, sofern im Falle des Färbens oder Bedruckens von Mischgeweben mit hydrophilen Fasern letztere sorgfältig gereinigt werden. Schließlich besitzen sie ein hervorragendes Aufbau- und Ausziehvermögen.

Vorzugsweise werden die erfindungsgemäßen Farbstoffe zum Färben und Bedrucken von Materialien aus hochmolekularen Polyestern, insbesondere solchen auf Basis von Polyäthylenglykolterephthalaten oder von Materialien aus Zellulose-2 1/2- oder -triacetat eingesetzt. Diese Materialien können in Form von flächen- oder fadenförmigen Gebilden vorliegen und z.B. zu Garnen oder gewebten oder gestrickten Textilstoffen verarbeitet sein. Das Färben des genannten Fasergutes mit den erfindungsgemäßen Farbstoffen erfolgt in an sich bekannter Weise, vorzugsweise aus wäßriger Suspension, gegebenenfalls in Gegenwart von Carriern, zwischen 80 bis ca. 110°C nach dem Ausziehverfahren oder nach dem HT-Verfahren im Färbeautoklav bei 110 bis 140°C sowie nach dem sogenannten Thermofixierverfahren, wobei die Ware mit der Färbeflotte geklotzt und anschließend bei etwa 180 bis 230°C fixiert wird. Das Bedrucken der genannten Materialien kann so durchgeführt werden, daß die mit erfindungsgemäße Farbstoffe enthaltenden Druckpasten bedruckte Ware zur Fixierung des Farbstoffs, gegebenenfalls in Gegenwart eines Carriers, bei Temperaturen zwischen 80 bis 230°C mit HT-Dampf, Druckdampf oder Trockenhitze behandelt wird. Man erhält auf diese Weise sehr farbstarke rote bis marineblaue Färbungen und Drucke mit sehr guten Echtheitseigenschaften, insbesondere einer sehr guten Licht- und Sublimierechtheit. Die erfindungsgemäßen Farbstoffe eignen sich auch zum Färben der vorstehend aufgeführten hydrophoben Materialien aus organischen Lösungsmitteln nach den hierbei bekannten Methoden und zum Färben in der Masse.
In den bei obigen Applikationen eingesetzten Färbeflotten und Druckpasten sollen die erfindungsgemäßen Farbstoffe in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengröße der Farbstoffe liegt im allgemeinen zwischen 0,5 und 5 µ, vorzugsweise bei etwa 1 µ. Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid, mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkylaryl-polyglycoläthersulfate. Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf ein Farbstoffgehalt bis zu 30 Gewichtsprozent und einen Dispergiermittelgehalt bis zu etwa 25 Gew.% eingestellt. Aus ökonomischen Gründen werden Farbstoffgehalte von 15 Gewichtsprozent meist nicht unterschritten. Die Dispersionen können auch noch weitere Hilfsmittel enthalten, z.B. solche, die als Oxydationsmittel wirken, wie z.B. Natrium-m-nitrobenzolsulfonat oder fungicide Mittel, wie z.B. Natrium-o-phenyl-phenolat und Natrium-pentachlorphenolat. Die so erhaltenen Farbstoff-dispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff, Dispergiermittel und andere Hilfsmittel, wie z.B. Netz-, Oxydations-, Konservierungs- und Entstaubungsmittel. Ein bevorzugtes Herstellungsverfahren für pulverförmige Farbstoffzubereitungen besteht

darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.
Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1: 5 bis 1:50 ergibt. Zusätzlich werden den Flotten im allgemeinen weitere Färbereihilfsmittel, wie Dispergier-, Netz- und Fixierhilfsmittel, zugesetzt.

Soll der Farbstoff für den Textildruck herangezogen werden, so werden die erforderlichen Mengen der Farbstoffeinstellungen zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Die Erfindung wird durch die folgenden Beispiele näher erläutert. Prozentangaben sind Gewichtsprozente.

Beispiel 1

a) 21,8 g 2.4-Dinitro-6-chloranilin werden in 100 ml Eisessig unter äußerer Kühlung bei 15°C mit 34,2 g 41%iger Nitrosylschwefelsäure diazotiert und bei 0 bis 5°C auf eine Lösung von 34,3 g 2-/2-Hydroxy-3-(methoxyethoxy-)-propylamino7-4-acetamino-anisol in 1000 ml 50%iger Essigsäure in Gegenwart von 2 g Aminosulfosäure gekuppelt. Nach beendeter Kupplung wird der Farbstoff durch Zugabe von 1000 ml Wasser gefällt, abgesaugt, mit 25%iger Essigsäure und Wasser gewaschen und unter vermindertem Druck getrocknet. Er stellt ein schwärzliches Pulver vom Schmelzpunkt 150 bis 5°C dar, das sich mit blauer Farbe in o-Dichlorbenzol löst.

b) 1,0 g des erhaltenen Farbstoffs der Formel

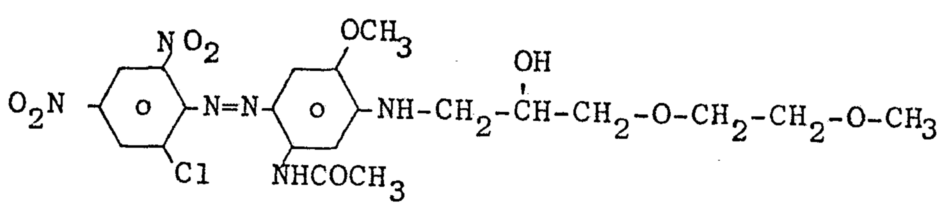

wird in feindispergierter Form in 2000 g Wasser eingerührt. Es wird mit 6 ml 30%iger Essigsäure und 4 g wasserfreiem Natriumacetat auf pH 5 gestellt, und es werden 2 g eines handelsüblichen Dispergiermittels auf Basis eines Naphthalinsulfonsäure-Formaldehyd-Kondensats und 8 g eines handelsüblichen Carriers zugesetzt. In die so erhaltene Färbeflotte bringt man 100 g eines Gewebes aus Polyethylenglykolterephthalat ein und färbt 1 Stunde bei 106°C. Anschließend wird nach Zusatz von 2 g eines handelsüblichen Emulgators bei pH 5 20 Minuten bei 70°C nachbehandelt und gespült. Man erhält so eine marineblaue Färbung mit sehr guten coloristischen Eigenschaften, insbesondere einer sehr guten Licht-, Trockenhitzefixier- und Trockenhitzeplissier- und Schweißechtheit.

c)Ein Gewebe aus Polyethylenglykolterephthalat wird auf dem Foulard bei 30°C mit einer Flotte geklotzt, die 30,0 g des in feine Verteilung gebrachten Farbstoffs, 1,0g Polyacrylamid vom K-Wert 120 und 0,5 g eines Polyglykolethers des Oleylalkohols und 968,5 g Wasser enthält. Nach dem Trocknen wird 60 Sekunden bei 210°C im Thermofixierrahmen fixiert. Nach anschließendem Spülen, reduktiver Nachbehandlung mit einer 0,2 %igen alkalischen Natriumdithionitlösung während 15 Minuten bei 70 bis 80°C, Spülen und Trocknen erhält man eine farbstarke marineblaue Färbung von sehr guten Echtheitseigenschaften.

d) Die zur Herstellung des Farbstoffs nach Abschnitt a) benötigte Kupplungskomponente 2-[2-Hydroxy-3-(methoxyethoxy)-propylamino]-4-acetamino-anisol kann folgendermaßen hergestellt werden:

90,0 g 2-Amino-4-acetaminoanisol in 50,0 ml Eisessig werden bei 50°C innerhalb 2 Stunden mit 79,2 g 3-(2-Methoxyethoxy)-1,2-epoxypropan versetzt, 2 Stunden bei 50°C und anschließend 1 Stunde bei 70 bis 80°C gerührt. Nach dem Abkühlen wird der Ansatz in Wasser oder 50 %iger Essigsäure aufgenommen. Auf die so vorliegenden Kupplungskomponenten kann2,4-Dinitro-6-chloranilin, wie in Abschnitt a) beschrieben, gekuppelt werden.

Beispiel 2:

a) 26,2 g 2-Brom-4,6-dinitroanilin werden in einer Mischung aus 100 ml Eisessig und 100 g konz. Schwefelsäure wie im Beispiel 1a) diazotiert und auf 37,4 g 2/2-Hydroxy-3-(ethoxyethoxy)-propylamino/-4-acetamino-phenetol gekuppelt. Der Farbstoff wird mit 5000 ml Wasser gefällt, abgesaugt, mit Wasser gewaschen und unter vermindertem Druck getrocknet. Er stellt ein schwärzliches Pulver dar, das bei 115°C bis 125°C schmilzt und sich in o-Dichlorbenzol mit blauer Farbe löst.

b) 1,0 g des erhaltenen Farbstoffs der Formel

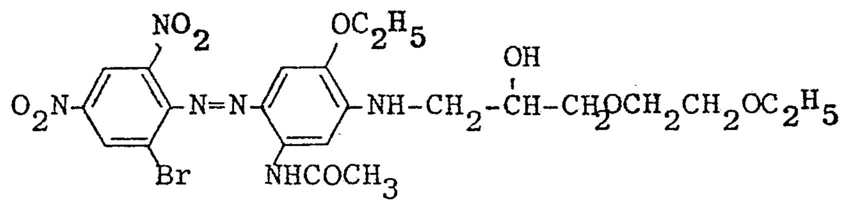

wird in feindispergierter Form in 2000 g Wasser eingerührt. Es wird mit Essigsäure auf einen pH-Wert von 5 - 6 eingestellt und mit 4,0 g Ammoniumsulfat und 2,0 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyethylenglycolterephthalat ein und färbt 1 Stunde bei 130°C. Nach anschließendem Spülen, reduktiver Nachbehandlung mit einer 0,2%igen alkalischen Natriumdithionitlösung während 15 Minuten bei 70-80°C, Spülen und Trocknen, erhält man eine blaue Färbung mit sehr guten coloristischen Eigenschaften, insbesondere einer sehr guten Licht- und Trockenhitzefixier- und -plissierechtheit.

d) 30 g des Farbstoffs werden in feiner Verteilung einer Druckpaste, die 45,0 g Johannisbrotkernmehl, 6,0 g 3-nitrobenzolsulfonsaures Natrium und 3,0 g Zitronensäure auf 1000 g enthält, einverleibt. Mit dieser Druckpaste erhält man auf einem Polyestergewebe nach dem Bedrucken, Trocknen und Fixieren im Thermofixierrahmen während 45 Sekunden bei 215°C, Spülen und Fertigstellung, wie im vorstehenden Abschnitt b) beschrieben, einen farbstarken blauen Druck von sehr guten coloristischen Eigenschaften, insbesondere einer sehr guten Licht- und

Thermofixierechtheit. 

In der nachstehenden Tabelle sind weitere erfindungsgemäße Farbstoffe angegeben, die gemäß den Verfahren der Beispiele 1 und 2 hergestellt, gefärbt und gedruckt werden können und die auf den angegebenen Fasermaterialien ebenfalls farbstarke rote bis marineblaue Färbungen bzw. Drucke mit ebenfalls sehr guten coloristischen Eigenschaften liefern:

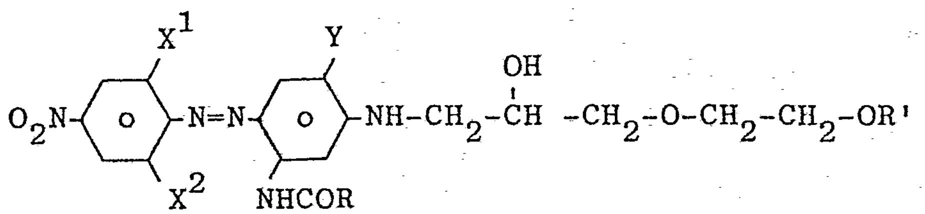

| Nr. | $X^1$ | $X^2$ | Y | R | R' | Nuance auf Polyester |
|---|---|---|---|---|---|---|
| 1 | $NO_2$ | Br | $OCH_3$ | $CH_3$ | $CH_3$ | marineblau |
| 2 | $NO_2$ | Cl | $OCH_3$ | $CH_3$ | $C_2H_5$ | marineblau |
| 3 | $NO_2$ | Br | $OCH_3$ | $CH_3$ | $n-C_4H_9$ | marineblau |
| 4 | $NO_2$ | Br | $OCH_3$ | $C_2H_5$ | $CH_3$ | marineblau |
| 5 | $NO_2$ | Cl | $OCH_3$ | $C_2H_5$ | $i-C_3H_7$ | marineblau |
| 6 | $NO_2$ | Br | $OCH_3$ | $C_2H_5$ | $C_2H_5$ | marineblau |
| 7 | $NO_2$ | Br | $OCH_3$ | $i-C_3H_7$ | $CH_3$ | marineblau |
| 8 | $NO_2$ | Cl | $OCH_3$ | $i-C_3H_7$ | $n-C_3H_7$ | marineblau |
| 9 | $NO_2$ | Cl | $OCH_3$ | $n-C_3H_7$ | $C_2H_5$ | marineblau |
| 10 | $NO_2$ | Br | $OCH_3$ | $n-C_3H_7$ | $i-C_4H_9$ | marineblau |
| 11 | $NO_2$ | Br | $OC_2H_5$ | $CH_3$ | $CH_3$ | marineblau |
| 12 | $NO_2$ | Br | $OC_2H_5$ | $CH_3$ | $n-C_4H_9$ | marineblau |
| 13 | $NO_2$ | Cl | $OC_2H_5$ | $C_2H_5$ | $CH_3$ | marineblau |
| 14 | $NO_2$ | Cl | $OC_2H_5$ | $C_2H_5$ | $i-C_3H_7$ | marineblau |
| 15 | $NO_2$ | Br | $OC_2H_5$ | $n-C_3H_7$ | $n-C_3H_7$ | marineblau |
| 16 | $NO_2$ | Cl | $OC_2H_5$ | $i-C_3H_7$ | $CH_3$ | marineblau |
| 17 | $NO_2$ | Br | $OC_2H_5$ | $i-C_3H_7$ | $n-C_4H_9$ | marineblau |
| 18 | $NO_2$ | Br | $O(CH_2)_2OH$ | $CH_3$ | $C_2H_5$ | marineblau |
| 19 | $NO_2$ | Cl | $O(CH_2)_2OH$ | $CH_3$ | $t-C_4H_9$ | marineblau |
| 20 | $NO_2$ | Cl | $O(CH_2)_2OH$ | $C_2H_5$ | $CH_3$ | marineblau |
| 21 | $NO_2$ | Br | $O(CH_2)_2OH$ | $n-C_3H_7$ | $C_2H_5$ | marineblau |
| 22 | $NO_2$ | Br | $O(CH_2)_2OCH_3$ | $CH_3$ | $CH_3$ | marineblau |
| 23 | $NO_2$ | Br | $O(CH_2)_2OCH_3$ | $CH_3$ | $i-C_3H_7$ | marineblau |
| 24 | $NO_2$ | Br | $O(CH_2)_2OCH_3$ | $C_2H_5$ | $C_2H_5$ | marineblau |
| 25 | $NO_2$ | Cl | $O(CH_2)_2OCH_3$ | $C_2H_5$ | $i-C_4H_9$ | marineblau |
| 26 | $NO_2$ | Cl | $O(CH_2)_2OC_2H_5$ | $CH_3$ | $CH_3$ | marineblau |

| Nr. | $X^1$ | $X^2$ | Y | R | R' | Nuance auf Polyester |
|---|---|---|---|---|---|---|
| 27 | $NO_2$ | Cl | $O(CH_2)_2OC_2H_5$ | $C_2H_5$ | $C_2H_5$ | marineblau |
| 28 | $NO_2$ | Br | $O(CH_2)_2OC_2H_5$ | $i-C_3H_7$ | $C_2H_5$ | marineblau |
| 29 | $NO_2$ | Cl | $CH_3$ | $CH_3$ | $CH_3$ | marineblau |
| 30 | $NO_2$ | Cl | $CH_3$ | $C_2H_5$ | $C_2H_5$ | marineblau |
| 31 | $NO_2$ | Br | $CH_3$ | $C_2H_5$ | $i-C_3H_7$ | marineblau |
| 32 | $NO_2$ | Br | Cl | $CH_3$ | $C_2H_5$ | marineblau |
| 33 | $NO_2$ | Cl | Cl | $CH_3$ | $n-C_3H_7$ | marineblau |
| 34 | $NO_2$ | Br | Cl | $C_2H_5$ | $CH_3$ | marineblau |
| 35 | $NO_2$ | Br | Cl | $n-C_3H_7$ | $CH_3$ | marineblau |
| 36 | CN | Cl | $OCH_3$ | $CH_3$ | $CH_3$ | blau |
| 37 | CN | Cl | $OCH_3$ | $CH_3$ | $C_2H_5$ | blau |
| 38 | CN | Cl | $OCH_3$ | $n-C_3H_7$ | $CH_3$ | blau |
| 39 | CN | Br | $OCH_3$ | $i-C_3H_7$ | $n-C_3H_7$ | blau |
| 40 | CN | Br | $OC_2H_5$ | $CH_3$ | $C_2H_5$ | blau |
| 41 | CN | Cl | $OC_2H_5$ | $CH_3$ | $C_2H_5$ | blau |
| 42 | CN | Br | $OC_2H_5$ | $C_2H_5$ | $CH_3$ | blau |
| 43 | CN | Br | $OC_2H_5$ | $C_2H_5$ | $i-C_3H_7$ | blau |
| 44 | CN | Br | $O(CH_2)_2OH$ | $CH_3$ | $C_2H_5$ | blau |
| 45 | CN | Br | $O(CH_2)_2OH$ | $C_2H_5$ | $CH_3$ | blau |
| 46 | CN | Cl | $O(CH_2)_2OCH_3$ | $CH_3$ | $CH_3$ | blau |
| 47 | CN | Br | $O(CH_2)_2OCH_3$ | $C_2H_5$ | $n-C_4H_9$ | blau |
| 48 | CN | Br | $O(CH_2)_2OC_2H_5$ | $CH_3$ | $n-C_3H_7$ | blau |
| 49 | CN | Cl | $O(CH_2)_2OC_2H_5$ | $C_2H_5$ | $C_2H_5$ | blau |
| 50 | CN | Br | $CH_3$ | $CH_3$ | $CH_3$ | blau |
| 51 | CN | Br | $CH_3$ | $n-C_3H_7$ | $n-C_3H_7$ | blau |
| 52 | CN | Cl | Cl | $CH_3$ | $CH_3$ | blau |
| 53 | CN | Br | Cl | $C_2H_5$ | $C_2H_5$ | blau |
| 54 | CN | H | $OCH_3$ | $CH_3$ | $C_2H_5$ | violett |
| 55 | CN | H | $OC_2H_5$ | $CH_3$ | $CH_3$ | violett |
| 56 | $NO_2$ | H | $OCH_3$ | $C_2H_5$ | $n-C_3H_7$ | violett |
| 57 | $NO_2$ | H | $O(CH_2)_2OCH_3$ | $CH_3$ | $C_2H_5$ | violett |
| 58 | $NO_2$ | Br | H | $CH_3$ | $CH_3$ | violett |
| 59 | $NO_2$ | Cl | H | $CH_3$ | $C_2H_5$ | violett |
| 60 | $NO_2$ | Br | H | $C_2H_5$ | $CH_3$ | violett |

| Nr. | $X^1$ | $X^2$ | Y | R | R' | Nuance auf Polyester |
|---|---|---|---|---|---|---|
| 61 | $NO_2$ | Br | H | $C_2H_5$ | $n-C_3H_7$ | violett |
| 62 | $NO_2$ | Br | H | $C_2H_5$ | $t-C_4H_9$ | violett |
| 63 | $NO_2$ | Cl | H | $n-C_3H_7$ | $C_2H_5$ | vioeltt |
| 64 | $NO_2$ | H | H | $CH_3$ | $CH_3$ | rubin |
| 65 | $NO_2$ | H | H | $CH_3$ | $C_2H_5$ | rubin |
| 66 | $NO_2$ | H | H | $C_2H_5$ | $CH_3$ | rubin |
| 67 | $NO_2$ | H | H | $C_2H_5$ | $i-C_3H_7$ | rubin |
| 68 | $NO_2$ | H | H | $C_2H_5$ | $n-C_4H_9$ | rubin |
| 69 | $NO_2$ | H | H | $n-C_3H_7$ | $CH_3$ | rubin |
| 70 | $NO_2$ | H | H | $n-C_3H_7$ | $n-C_3H_7$ | rubin |
| 71 | CN | H | H | $CH_3$ | $CH_3$ | rubin |
| 72 | CN | H | H | $CH_3$ | $n-C_3H_7$ | rubin |
| 73 | CN | H | H | $C_2H_5$ | $CH_3$ | rubin |
| 74 | CN | H | H | $C_2H_5$ | $C_2H_5$ | rubin |
| 75 | CN | H | H | $C_2H_5$ | $n-C_4H_9$ | rubin |
| 76 | CN | H | H | $i-C_3H_7$ | $CH_3$ | rubin |
| 77 | CN | H | H | $n-C_3H_7$ | $C_2H_5$ | rubin |
| 78 | CN | H | H | $i-C_3H_7$ | $i-C_3H_7$ | rubin |
| 79 | H | Br | H | $CH_3$ | $C_2H_5$ | rot |
| 80 | H | Br | H | $CH_3$ | $i-C_3H_7$ | rot |
| 81 | H | Br | H | $CH_3$ | $n-C_4H_9$ | rot |
| 82 | H | Br | H | $C_2H_5$ | $CH_3$ | rot |
| 83 | H | Br | H | $C_2H_5$ | $C_2H_5$ | rot |
| 84 | H | Br | H | $C_2H_5$ | $n-C_4H_9$ | rot |
| 85 | H | Br | H | $n-C_3H_7$ | $CH_3$ | rot |
| 86 | H | Cl | H | $CH_3$ | $CH_3$ | rot |
| 87 | H | Cl | H | $CH_3$ | $n-C_3H_7$ | rot |
| 88 | H | Cl | H | $CH_3$ | $t-C_4H_9$ | rot |
| 89 | H | Cl | H | $C_2H_5$ | $CH_3$ | rot |
| 90 | H | Cl | H | $C_2H_5$ | $C_2H_5$ | rot |
| 91 | H | Cl | H | $i-C_3H_7$ | $C_2H_5$ | rot |
| 92 | H | H | H | $CH_3$ | $C_2H_5$ | rot |
| 93 | H | H | H | $CH_3$ | $n-C_4H_9$ | rot |
| 94 | H | H | H | $C_2H_5$ | $CH_3$ | rot |
| 95 | H | H | H | $C_2H_5$ | $C_2H_5$ | rot |
| 96 | H | H | H | $C_2H_5$ | $i-C_4H_9$ | rot |
| 97 | H | H | H | $n-C_3H_7$ | $CH_3$ | rot |

## PATENTANSPRÜCHE

1. Von wasserlöslichmachenden Gruppen freie Monoazofarbstoffe der Formel I

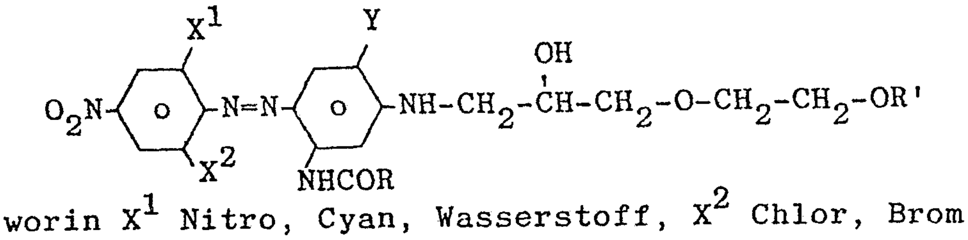

(I)

worin $X^1$ Nitro, Cyan, Wasserstoff, $X^2$ Chlor, Brom, Wasserstoff, Y Methoxy, Ethoxy, Hydroxyethoxy, Methoxyethoxy, Ethoxyethoxy, Methyl, Chlor, Brom, Wasserstoff, R Alkyl mit 1 bis 3 C-Atomen, R' Alkyl mit 1 bis 4 C-Atomen bedeuten.

2. Farbstoffe nach Anspruch 1, dadurch gekennzeichnet, daß $X^1$ Nitro oder Cyan und $X^2$ Chlor oder Brom bedeuten.

3. Farbstoffe nach Anspruch 2, dadurch gekennzeichnet, daß Y Methoxy, Ethoxy, Hydroxyethoxy, Methoxyethoxy, Ethoxyethoxy, Methyl oder Chlor, R Methyl und Ethyl bedeuten.

4. Farbstoffe nach Anspruch 1, dadurch gekennzeichnet, daß $X^1$ Wasserstoff und $X^2$ Chlor oder Brom bedeuten.

5. Farbstoffe nach Anspruch 1, dadurch gekennzeichnet, daß $X^1$ Nitro und $X^2$ Chlor oder Brom und Y Wasserstoff bedeuten.

6. Farbstoffe nach Anspruch 1, dadurch gekennzeichnet, daß $X^1$ Wasserstoff, $X^2$ Wasserstoff und Y Wasserstoff bedeuten.

7. Farbstoffe nach Anspruch 1, dadurch gekennzeichnet, daß $X^1$ Wasserstoff, $X^2$ Chlor oder Brom und Y Wasserstoff bedeuten.

8. Farbstoffe nach Anspruch 1, dadurch gekennzeichnet, daß $X^1$ Wasserstoff und $X^2$ Wasserstoff bedeuten.

9. Farbstoffe nach Anspruch 1, dadurch gekennzeichnet, daß $X^1$ Nitro oder Cyan, $X^2$ Wasserstoff und Y Wasserstoff bedeuten.

10. Verfahren zur Herstellung der Farbstoffe der Ansprüche 1 bis 9, dadurch gekennzeichnet, daß ein Amin der Formel II

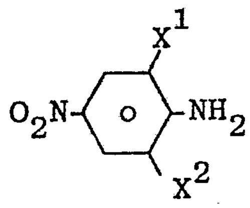

(II)

diazotiert und auf ein Amin der Formel III

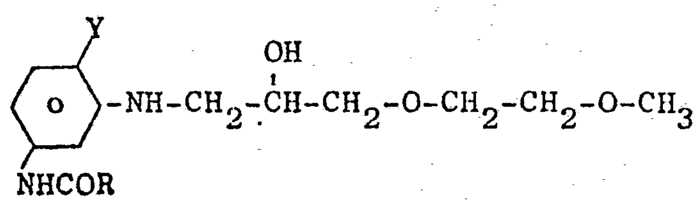

(III)

gekuppelt wird, wobei $X^1$, $X^2$, Y, R und R' die in den Ansprüchen 1 bis 9 angegebenen Bedeutungen besitzen.

11. Verwendung der Farbstoffe der Ansprüche 1 bis 9 oder deren Mischungen untereinander oder deren Mischungen mit anderen Dispersionsfarbstoffen zum Färben und Bedrucken von Materialien aus hochmolekularen Polyestern, hochmolekularen Polyamiden, Cellulosetriacetat, Cellulose-2 $^1/2$-acetat, oder Mischungen dieser Materialien mit Wolle, Baumwolle, Regeneratcellulose.

Europäisches Patentamt

# EUROPÄISCHER RECHERCHENBERICHT

0040413
Nummer der Anmeldung
EP 81 10 3749

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | JP - B - 44 30 031 (NIPPON KAYAKU)<br>* Patentanspruch; Seite 3, Formel 2; Seite 4, Formel 4 *<br>--------- | 1-3, 10,11 | C 09 B 29/085<br>D 06 P 1/18 |

**RECHERCHIERTE SACHGEBIETE (Int. Cl.³)**

C 09 B 29/085
29/06
29/00
29/08

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 25-08-1981 | DELANGHE |